# EUROPEAN PATENT SPECIFICATION

(11) **EP 1 875 794 B1**
(45) Date of publication and mention of the grant of the patent: **14.10.2009**
(21) Application number: 07008618.6
(22) Date of filing: 27.04.2007
(51) Int. Cl.: A01D 89/00, A01F 15/10

(54) **Pick up device for agricultural products having a thin and long-limbed shape such as grass, straw, leguminous and similar products.**
Aufhebevorrichtung für landwirtschaftliche Produkte mit einer dünnen und länglich gegliederten Form wie Gras, Stroh, hülsenfruchtartige und ähnliche Produkte.
Dispositif de ramassage pour produits agricoles comportant une forme de branche mince et longue tels que l'herbe, la paille, les légumineux et autres produits similaires.

(30) Priority: 03.07.2006 IT RN20060046
(43) Date of publication of application: 09.01.2008
(73) Proprietor: Ubaldi, Denis, 47821 Santa Giustina RN (IT); Ubaldi, Raffaele, 47821 Santa Giustina RN (IT)
(72) Inventor: Ubaldi, Raffaele, 47821 Santa Giustina (Rimini) (IT)
(74) Representative: Paolizzi, Marco

(56) References cited:
- EP-A- 0 039 286
- DE-U1- 29 720 527
- GB-A- 1 196 311
- GB-A- 2 059 739
- US-A- 3 295 302
- US-A- 3 766 725
- US-A- 4 182 102

## Description

The subject of this invention is a pick up device for agricultural products having a thin and long-limbed shape such as grass, straw, leguminous and similar products.

Pick up devices are usually used for picking up from the ground, grass, straw, hay (which have been previously cut by other machines) or for picking up leguminous; anyway for picking up similar agricultural products (generally vegetables), having a long-limbed shape.

To this purpose they are coupled to a tractive unit (like a tractor or a self-propelled agricultural machine) which tows them.

Common pick up devices have a preferential direction of development which, during use, is kept transversal to the shifting direction of the tractive unit. In order to lift the agricultural products from the ground and move them (before unloading), these pick up devices use and are combined to a plurality of pick up elements which are moved by a driving system. The driving system is generally operated by a universal joint or the like which, through a power take-off, takes driving power from the tractive unit engine.

Each pick up element is in turn equipped with one or more prongs placed side by side. The pick up elements (and the respective prongs) are generally arranged around the preferential direction of development along rows, which are parallel to the preferential direction of development itself. Each pick up element (and its prongs) is moved by the driving system along a closed trajectory which surrounds the preferential direction of development. The prongs are straight elements, one end of which is hooked (directly or through some parts of the pick up element) to the driving system, while the opposite end is free. Ideally every prong can be divided into three zones: a zone of product taking up, which corresponds to the free end and is the zone which comes first into contact with the product during harvesting; a zone of product transport, consecutive to the taking up zone, having a size larger than the latter; an hooking zone, consecutive to the transport zone, intended for hooking to the driving system. The transport zone is a straight segment. The taking up zone is also a straight segment which can lie on the same lying straight line of the transport zone or it can be slightly inclined with respect to the latter. A plurality of bands placed side by side, fixed to the driving system with respect to the pick up elements, surrounds the preferential direction of development at least in correspondence with a section of the closed trajectory. This trajectory section corresponds to the lifting of the agricultural product from the ground and to the transport of it, through the prongs, up to the product unloading point which is placed along the closed trajectory itself. This plurality of bands defines a covering surface of the driving system, which prevents the agricultural product from falling inside during transport. Every band is placed between two prongs which are consecutive to each other along the preferential direction of development. Between two consecutive bands a space is provided to let each prong freely move along the closed trajectory.

Prongs stretch out towards outside the space delimited by the covering surface, the lying straight line of the transport zone being substantially perpendicular to the covering surface itself.

Generally a row of prongs acts as a rotating rake, which comes first into contact with the product through the taking up zone and lifts it up. Then the product is intercepted by the transport zone which carries it up to a point where it has to be unloaded.

The pick up devices and pick up elements described above have some drawbacks.

In particular, during the motion from the point where the product is lifted up from the ground to the product unloading point, the product itself tends to accumulate against the bands. This favours product infiltration in the space between one band and the other (necessary for the prong movement), thus getting the area of the driving system dirty. Besides, even the product unloading itself becomes difficult.

Document GB-A-1 196 311 discloses a device for picking up lump and fibrous materials (including strawy mass and the like), which comprises a pick up assembly having fork members for picking up the material, each fork member comprising a plurality of teeth which are spaced along a tube hinged at a rotatable support means. A plurality of discharge guides in the form of bands are fixed at the structure of the pick-up device, each guide being interposed between two consecutive teeth of the fork members. Rotation of the support means in a first direction makes each tooth move between two consecutive discharge guides along a closed trajectory around the line of development of the device. During movement from a point where the material is picked-up to a point where the material is discharged onto a sloping section of the guides, each tooth does not rotate around the point where it is hinged at the rotatable support means. Once arrived at the discharge point, the tooth is rotated around said hinge point by a fork reversing arrangement, to make the tooth disappear in the space delimited by the guides during the motion along the remaining part of the closed curve from the discharge point to the pick-up point. The teeth have a curved shape which is turned towards the discharge point when the teeth move along the first part of the closed trajectory.

A similar device is disclosed in Document EP-A-0 039 286, which has a slightly different mechanism for effecting the rotation of the fork members around the line of development of the pick-up device. Each tooth of the fork members develops along a straight line for most of its length from the hinge point to the tip, except for a limited region at the tip, where it is folded to obtain an extremity which is straight but shifted with respect to, and parallel with, the remaining portion of the tooth itself.

The present invention aims at removing the above mentioned drawbacks, providing a pick up device for agricultural products having a thin and long-limbed shape such as grass, straw, leguminous and similar products that, thanks to the configuration of the pick up elements and properly mounting the pick up elements, allows an optimum unloading of the product and avoids product infiltration in the area where the driving system is placed.

These aims, and others beside, which will be more apparent in the following description, are reached, according to the present invention, by a pick up device for agricultural products having a thin and long-limbed shape such as grass, straw, leguminous and similar products which has structural and functional features in accordance with the independent claim herein, further embodiments of the same being described by the corresponding dependent claims herein.

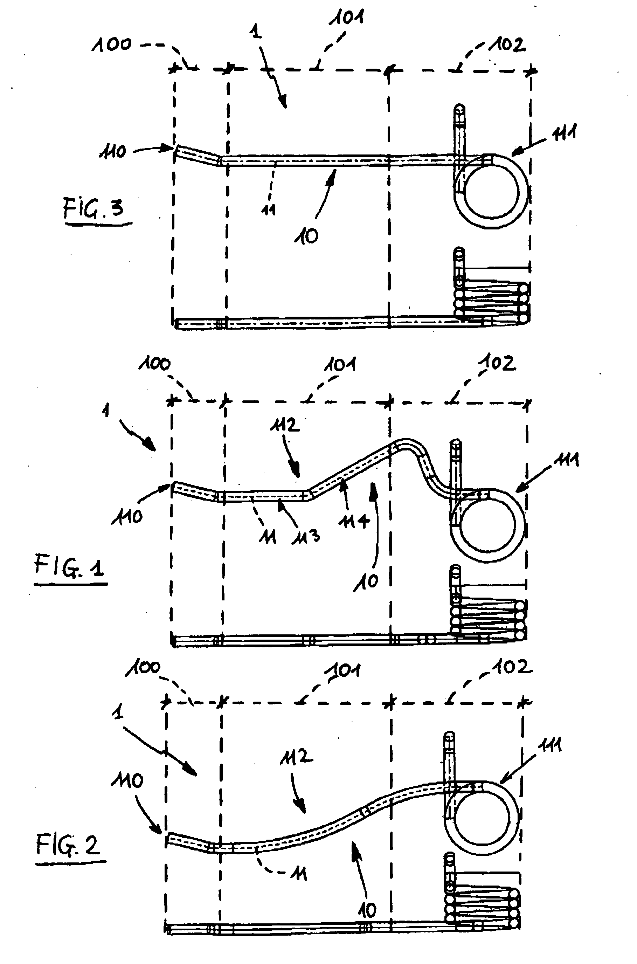

The invention is described in more detail below with reference to the accompanying drawings, which represent a preferred and non-limiting embodiment.
- Figure 1 shows a side view and a plan view of a first embodiment of a pick up element according to the invention, comprising only a prong for the sake of simplicity and by way of a (not limitative) example.
- Figure 2 shows a side view and a plan view of a second embodiment of a pick up element according to the invention, comprising only a prong for the sake of simplicity and by way of a mere (not limitative) example.
- Figure 3 shows a side view and a plan view of a pick up element according to the prior-art, comprising only a prong for the sake of simplicity and by way of a mere (not limitative) example.
- Figure 4 shows a perspective and schematic view of a pick up device according to the invention;
- Figure 5 shows a cross-section view, with some parts removed the better to highlight others, of the pick up device of figure 4.
- Figure 6 shows an enlarged detail marked by a circle in figure 5
With reference to figures 1 and 2, a pick up element 1 for agricultural products having a thin and long-limbed shape such as grass, straw, leguminous and similar products, which can be used in pick up devices 2 according to the invention, comprises at least one long-limbed pick up prong 10 developing along a development line 11 between a first and a second end 110, 111. As shown in the figures by reference dashed lines, the prong 10 is ideally divided, along the development line 11 into:
- a taking up zone 100 of agricultural products from the ground comprising the first end 110;
- a transport zone 101 of agricultural products consecutive to the taking up zone 100;
- a hooking zone 102 consecutive to the transport zone 101 and comprising the second end 111.

The hooking zone 102 is intended for hooking to a pick up device 2, directly or by means of some hooking parts of the pick up element 1 .

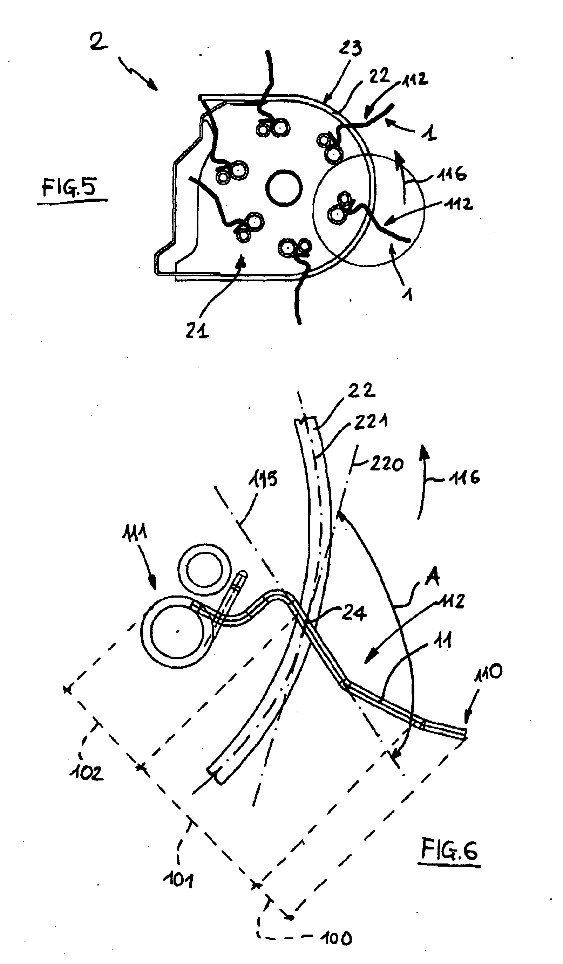

As shown in figures 1, 2 and also visible in figures 5 and 6, in the transport area 101 of the prong 10 of the pick up element 1 according to the invention, the development line 11 defines a holding and transport concavity 112 of agricultural products.

This constitutes a substantial difference from the prong 10 of the prior art shown in figure 3, which, on the contrary, has a development line 11 lying on a single straight line along the whole of the transport zone 101 (and also along the taking up zone 100).

Thanks to this difference, when the pick up element 1, according to the invention, is properly mounted on a pick up device 2, the product tends to accumulate in the holding and transport concavity 112 and not in the hooking area 102.

As illustrated in figure 2, in the transport zone 101 the development line 11 may be curvilinear without any straight segment. Alternatively, at least part of the holding and transport concavity 112 is defined by a broken line (see figure 1, where this holds for the whole portion of the development line 11 which defines the holding and transport concavity 112).

In particular, as illustrated in figure 1, the broken line is defined by a first 113 and a second 114 segment. Any way the broken line may be defined also by more than two segments. At least two of the segments forming the broken line may be joined together by a curved portion (as shown in figure 1).

In an embodiment of the invention the meeting point between the first 113 and the second 114 segment is less far from the hooking zone 102 than from the taking up zone 100. Even if for the sake of simplicity the figures show pick up elements 1 provided, by way of example, with only one prong 10, according to the invention the pick up element 1 may comprise two or more identical prongs 10 placed side by side. Such prongs 10 may be made integral to one another by (not illustrated) connecting means provided with hooking parts to a pick up element 2. The specific shape of the prong 10 in the hooking area 102 is not essential for the invention ultimate aim: this shape is generally determined by the internal features of the pick up device 2 whereon the pick up element 1 shall be mounted and can contemplate (as partly illustrated in the figures) spiral parts working as springs to allow an elastic strain of pick up elements 1 during operation.

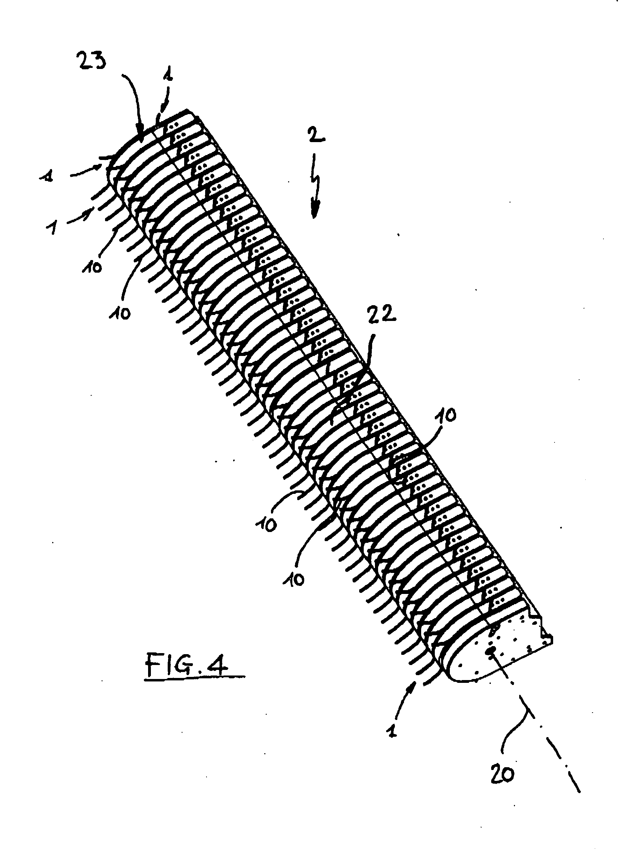

With reference to figures 4, 5, 6, a pick up device 2 for agricultural products having a thin and long-limbed shape such as grass, straw, leguminous and similar products, of the type which can be dragged by a tractive unit and has a preferential direction 20 of development which, during use, is kept transversal to the shifting direction of the tractive unit, comprises a plurality of pick up elements 1 of agricultural products, each of them provided with at least one long-limbed pick up prong 10. Besides, the pick up device 2 comprises a driving system 21 of every pick up element 1 along a closed trajectory surrounding the preferential direction 20 of development, the closed trajectory comprising a transport segment of the agricultural product between a taking up point of the product from the ground by the long-limbed prongs 10 and a release point of the agricultural product by the long-limbed prongs 10, once arrived in correspondence with the release point the prong 10 not having a transport function of the agricultural product any more. Moreover, the pick up device 2 comprises a plurality of bands 22 placed side by side, fixed to the driving system 21 with respect to the pick up elements 1 and surrounding the preferential direction 20 of development at least in correspondence with the transport segment of the closed trajectory. The plurality of bands 22 placed side by side defines a surface 23 of at least partial covering of the driving system 21. Each band is placed between two long-limbed prongs 10 which are consecutive to each other along the preferential direction 20 of development and between two consecutive bands 22 a space is provided to let each long-limbed prong freely move along the preferential direction 20 of development.

The pick up elements 1 are pick up elements 1 according to the invention and made according to any one of the embodiments and possibilities previously described in the description of pick up elements 1 according to the invention. In the pick up device 2 according to the invention, during the motion of the prongs 10 along the whole of the transport segment of the closed trajectory:
- the hooking area 102 of each prong 10 remains inside the surface 23 of at least partial covering of the driving system 21;
- the holding and transport concavity 112 is turned towards the same direction 116 of movement of the prongs 10 along the closed trajectory and is inclined with respect to the bands 22 so that during the motion of the prongs 10 along the transport segment of the closed trajectory from the taking up point to the release point the agricultural product tends to move away from the bands 22 and to accumulate in the holding and transport concavity 112, facilitating the release of the agricultural product from the prongs 10 at the release point.

In a preferred embodiment of the pick up device 2 according to the invention, during the motion of the prongs 10 along the whole of the transport segment of the closed trajectory:
- the development line 11 of every prong 10 intersects the surface 23 of at least partial covering in a point 24 of intersection which corresponds to a point of the transport zone 101 of the prong 10;
- the tangent 115 to the development line 11 of each prong 10 in the point of intersection 24 and the tangent 220 to a development line 221 of each band 22 adjacent to it in the same point of intersection 24 form between them, outside the surface 23 of at least partial covering and on the side towards which the transport concavity 112 is turned to, an angle A greater than 90 degrees;
during the motion of the prong 10 along the transport segment of the closed trajectory from the taking up point to the release point the agricultural product tends to move away from the bands 22 and to accumulate in the transport concavity 112, facilitating the release of the agricultural product from the prongs 10 at the release point.

Opportunely the angle A is greater than 110 degrees. Opportunely, the angle A is smaller than 170 degrees. Preferably the angle A is comprised between 120 and 140 degrees.

The invention has some important advantages.

First of all the product, having the tendency to stay confined in the holding and transport concavity 112, does not stand on the bands 22 and then it takes less the risk to filter into the sheltered area wherein the driving system 21 lies, thus avoiding gears and mechanisms getting dirty or obstructing because of product infiltration. Moreover, once the prongs 10 reach the release point, the complete product unloading is much easier and made in an easy way, without any problems.

The invention as it has been conceived, is susceptible of several modifications and variants, all of them being part of the inventive concept characterizing the invention.

Furthermore, all details are replaceable by other technically equivalent elements. In practice, all the employed materials, as well as dimensions, can be any one, according to requirements.

## Claims

1. A pick up device (2) for agricultural products having a thin and long-limbed shape such as grass, straw, leguminous and similar products, of the type which can be dragged by a tractive unit and has a preferential direction (20) of development which, during use, is kept transversal to the shifting direction of the tractive unit, comprising:
- a plurality of pick up elements (1) of agricultural products, each of them provided with at least one long-limbed pick up prong (10);
- a driving system (21) of every pick up element (1) along a closed trajectory surrounding the preferential direction (20) of development, the closed trajectory comprising a transport segment of the agricultural product between a taking up point of the product from the ground by the long-limbed prongs (10) and a release point of the agricultural product by the long-limbed prongs (10), once arrived in correspondance with the release point the prong (10) not having a transport function of the agricultural product any more;
- a plurality of bands (22) placed side by side, fixed to the driving system (21) with respect to the pick up elements (1) and surrounding the preferential direction (20) of development at least in correspondence with the transport segment of the closed trajectory to define a surface (23) of at least partial covering of the driving system (21), each band being placed between two long-limbed prongs (10) which are consecutive to each other along the preferential direction (20) of development, a space being provided between two consecutive bands (22) to let each long-limbed prong (10) freely move around the preferential direction (20) of development;
wherein the prong (10) of each pick up element (1) develops along a development line (11) between a first and a second end (110,111), the prong (10) being ideally divided along the development line (11) intro:
- a taking up zone (100) of agricultural products from the ground comprising the first end (110);
- a transport zone (101) of agricultural products consecutive to the taking up zone (100), in the transport zone (101) the development line (11) defining a holding and transport concavity (112) of the agricultural products;
- a hooking zone (102) consecutive to the transport zone (101), comprising the second end (111) and hooking the pick up element (1) to the pick up device (2), directly or by means of hooking parts of the pick up element (1);
and wherein, during the motion of prongs (10) along the whole of the transport segment of the closed trajectory the hooking zone (102) of each prong (10) remains inside the surface (23) of at least partial covering of the driving system (21);
**characterized in that**, during the motion of prongs (10) along the whole of the transport segment of the closed trajectory:
- the holding and transport concavity (112) is turned towards the same direction (116) of movement of the prongs (10) along the closed trajectory and is inclined with respect to the bands (22);
- the development line (11) of every prong (10) intersects the surface (23) of at least partial covering in a point (24) of intersection which corresponds to a point of the transport zone (101) of the prong (10);
- the tangent (115) to the development line (11) of each prong (10) in the point of intersection (24) and the tangent (220) to a development line (221) of each band (22) adjacent to it at the same point of intersection (24) form between them, outside the surface (23) of at least partial covering and on the side towards which the transport concavity (112) is turned to, an angle (A) greater than 90 degrees;
so that during the motion of the prong (10) along the transport segment of the closed trajectory from the taking up point to the release point the agricultural product tends to move away from the bands (22) and to accumulate in the transport concavity (112), facilitating the release of the agricultural product from the prongs (10) at the release point.

2. Pick up device (2) according to claim 1, **characterized in that** the angle (A) is greater than 110 degrees.

3. Pick up device (2) according to claim 1, **characterized in that** the angle (A) is comprised between 120 and 140 degrees.

4. Pick up device (2) according to claim 1, **characterized in that** the angle (A) is smaller than 170 degrees.

5. Pick up device (2) according to any of the previous claims, **characterized in that** at least part of the holding and transport concavity (112) is defined by a broken line.

6. Pick up device (2) according to claim 5, **characterized in that** the broken line is defined by a first (113) and a second (114) segment.

7. Pick up device (2) according to claim 6, **characterized in that** the meeting point between the first (113) and the second (114) segment is less far from the hooking zone (102) than from the taking up zone (100).

8. Pick up device (2) according to any one of the claims from 5 to 7,
**characterized in that** at least two of the segments forming the broken line are joined together by a curved portion.

9. Pick up device (2) according to any of the previous claims, **characterized in that** it comprises two or more identical prongs (10) placed side by side.

## Patentansprüche

1. Aufhebevorrichtung (2) für landwirtschaftliche Produkte mit einer dünnen und länglich gegliederten Form wie Gras, Stroh, hülsenfruchtartige und ähnliche Produkte, welche von einem Triebfahrzeug gezogen werden kann und eine vorgezogene Ausdehnungsrichtung (20) hat, die während des Betriebes quer zu der Bewegungsrichtung des Triebfahrzeuges gehalten ist, enthaltend:
- eine Anzahl von Aufnahmeelementen (1) für landwirtschaftliche Produkte, jedes derselben versehen mit wenigstens einem länglich ausgebildeten Zinken (10);
- ein Antriebssystem (21) für jedes Aufnahmeelement (1) entlang einer die vorgezogene Ausdehnungsrichtung (20) umgebenden geschlossenen Bahn, wobei die geschlossene Bahn ein Transportsegment für das landwirtschaftliche Produkt enthält, und zwar zwischen einem Aufnahmepunkt des Produktes vom Boden durch die länglich ausgebildeten Zinken (10) und einem Freigabepunkt des landwirtschaftlichen Produktes durch die länglich ausgebildeten Zinken (10), wobei bei der Ankunft an dem Freigabepunkt der Zinken (10) nicht mehr die Aufgabe des Transportes des landwirtschaftlichen Produktes hat;
- eine Seite an Seite angeordnete Anzahl von Bändern (22), befestigt an dem Antriebssystem (21) im Verhältnis zu den Aufnahmeelementen (1) und die vorgezogene Ausdehnungsrichtung (20) umgebend, wenigstens entsprechend dem Transportsegment der geschlossenen Bahn, um eine wenigstens teilweise das Antriebssystem (21) abdeckende Oberfläche (23) zu beschreiben, wobei jedes Band zwischen zwei länglich ausgebildeten Zinken (10) angeordnet ist, welche aufeinanderfolgend entlang der vorgezogenen Ausdehnungsrichtung (20) verteilt sind, wobei ein Zwischenraum zwischen zwei aufeinanderfolgenden Bändern (22) vorgesehen ist, damit sich jeder länglich ausgebildete Zinken (10) frei um die vorgezogene Ausdehnungsrichtung (20) bewegen kann;
bei welcher sich der Zinken (10) eines jeden Aufnahmeelementes (1) entlang einer Ausdehnungslinie (11) zwischen einem ersten und einem zweiten Ende (110, 111) erstreckt, wobei der Zinken (10) entlang der Ausdehnungslinie (11) ideell aufgeteilt ist in:
- einen Aufnahmebereich (100) der landwirtschaftlichen Produkte vom Boden, enthaltend das erste Ende (110):
- einen Transportbereich (101) der landwirtschaftlichen Produkte, anschliessend an den Aufnahmebereich (100), wobei in dem Transportbereich (101) die Ausdehnungslinie (11) eine Halte- und Transportvertiefung (112) für die landwirtschaftlichen Produkte beschreibt;
- einen Einhakbereich (102), anschliessend an den Transportbereich (101), enthaltend das zweite Ende (111), bestimmt zum Einhaken des Aufnahmeelementes (1) an der Aufhebevorrichtung (2), und zwar direkt oder mit Hilfe von Hakenteilen des Aufnahmeelementes (1); und bei welcher während der Bewegung der Zinken (10) entlang dem gesamten Transportsegment der geschlossenen Bahn der Einhakbereich (102) eines jeden Zinken (10) innerhalb der Oberfläche (23) verbleibt, die wenigstens teilweise das Antriebssystem (21) abdeckt;
**dadurch gekennzeichnet, dass** während der Bewegung der Zinken (10) entlang des gesamten Transportsegmentes der geschlossenen Bahn:
- die Halte- und Transportvertiefung (112) in dieselbe Bewegungsrichtung (116) der Zinken (10) entlang der geschlossenen Bahn gerichtet und im Verhältnis zu den Bändern (22) geneigt ist;
- die Ausdehnungslinie (11) eines jeden Zinken (10) die Oberfläche (23) der wenigstens teilweisen Abdeckung an einem Punkt (24) schneidet, welcher einem Punkt des Transportbereiches (101) des Zinken (10) entspricht;
- die Tangente (115) zu der Ausdehnungslinie (11) eines jeden Zinken (10) an dem Schnittpunkt (24) und die Tangente (220) zu einer Ausdehnungslinie (221) eines jeden Bandes (22), angrenzend an dieses an demselben Schnittpunkt (24), zwischen sich ausserhalb der Oberfläche (23) der wenigstens teilweisen Abdeckung und an der Seite, welcher die Transportvertiefung (112) zugewandt ist, einen Winkel (A) grösser als 90° bilden; so dass während der Bewegung des Zinken (10) entlang dem Transportsegment der geschlossenen Bahn von dem Aufnahmepunkt zu dem Freigabepunkt das landwirtschaftliche Produkt dazu neigt, sich von den Bändern (22) fort zu bewegen und sich in der Transportvertiefung (112) zu sammeln, wobei die Freigabe des landwirtschaftlichen Produktes von den Zinken (10) an dem Freigabepunkt erleichtert wird.

2. Aufhebevorrichtung (2) nach Patentanspruch 1, **dadurch gekennzeichnet, dass** der Winkel (A) grösser als 110° ist.

3. Aufhebevorrichtung (2) nach Patentanspruch 1, **dadurch gekennzeichnet, dass** der Winkel (A) zwischen 120° und 140° beträgt.

4. Aufhebevorrichtung (2) nach Patentanspruch 1, **dadurch gekennzeichnet, dass** der Winkel (A) kleiner als 170° ist.

5. Aufhebevorrichtung (2) nach einem jeden der vorstehenden Patentansprüche, **dadurch gekennzeichnet, dass** wenigstens ein Teil der Halte- und Transportvertiefung (112) durch eine unterbrochene Linie beschrieben wird.

6. Aufhebevorrichtung (2) nach Patentanspruch 5, **dadurch gekennzeichnet, dass** die unterbrochene Linie durch ein erstes (113) und ein zweites (114) Segment beschrieben wird.

7. Aufhebevorrichtung (2) nach Patentanspruch 6, **dadurch gekennzeichnet, dass** der Begegnungspunkt zwischen dem ersten (113) und dem zweiten (114) Segment weniger von dem Einhakbereich (102) als von dem Aufnahmebereich (100) entfernt ist.

8. Aufhebevorrichtung (2) nach einem jeden der Patentansprüche von 5 bis 7, **dadurch gekennzeichnet, dass** wenigstens zwei der die unterbrochene Linie bildenden Segmente durch einen gebogenen Abschnitt miteinander verbunden sind.

9. Aufhebevorrichtung (2) nach einem jeden der vorstehenden Patentansprüche, **dadurch gekennzeichnet, dass** sie zwei oder mehr identische Zinken (10) enthält, angeordnet Seite an Seite.

## Revendications

1. Dispositif de ramassage (2) pour produits agricoles comportant une forme de branche mince et longue tels que l'herbe, la paille, les légumineux et produits similaires, du type pouvant être tracté par une unité de traction et présentant une direction préférentielle (20) de développement qui, en opération, est maintenue transversale à la direction de déplacement de l'unité de traction, comprenant:
- une pluralité d'éléments de ramassage (1) de produits agricoles, chacun desquels étant pourvu d'au moins un fourchon longiligne de ramassage (10);
- un système (21) de déplacement de chaque élément de ramassage (1) le long d'une trajectoire fermée qui entoure la direction préférentielle (20) de développement, la trajectoire fermée comprenant une zone de transport du produit agricole entre un point de prélèvement du produit du sol par les fourchons longilignes (10) et un point de libération du produit agricole par les fourchons longilignes (10), les fourchons (10) n'ayant plus de fonction de transport du produit agricole lorsqu'ils arrivent en correspondance du point de libération;
- une pluralité de bandes (22) placées côte-à-côte, fixées au système de déplacement (21) par rapport aux éléments de ramassage (1) et entourant la direction préférentielle (20) de développement au moins en correspondance de la zone de transport de la trajectoire fermée pour définir une surface (23) de couverture au moins partielle du système de déplacement (21), chaque bande étant placée entre deux fourchons longilignes (10) consécutifs entre eux le long de la direction préférentielle (20) de développement, un espace étant prévu entre deux bandes (22) consécutives pour laisser chaque fourchon longiligne (10) se déplacer librement autour de la direction préférentielle (20) de développement;
dans lequel le fourchon (10) de chaque élément de ramassage (1) se développe le long d'une ligne de développement (11) entre une première et une seconde extrémité (110, 111), le fourchon (10) étant idéalement divisé le long de la ligne de développement (11) en:
- une zone (100) de prélèvement des produits agricoles du sol comprenant la première extrémité (110);
- une zone (101) de transport des produits agricoles consécutive à la zone (100) de prélèvement, dans la zone de transport (101) la ligne de développement (11) définissant une concavité (112) de retenue et de transport des produits agricoles;
- une zone (102) d'accrochage consécutive à la zone de transport (101), comprenant la seconde extrémité (111) et étant destinée à l'accrochage de l'élément de ramassage (1) au dispositif de ramassage (2), directement ou au moyen de parties d'accrochage de l'élément de ramassage (1); et dans lequel, pendant le déplacement des fourchons (10) le long de toute la zone de transport de la trajectoire fermée, la zone d'accrochage (102) de chaque fourchon (10) reste à l'intérieur de la surface (23) de couverture au moins partielle du système de déplacement (21);
**caractérisé en ce que**, pendant le déplacement des fourchons (10) le long de toute la zone de transport de la trajectoire fermée:
- la concavité de retenue et de transport (112) est orientée vers la même direction (116) de mouvement des fourchons (10) le long de la trajectoire fermée et est inclinée par rapport aux bandes (22);
- la ligne de développement (11) de chaque fourchon (10) croise la surface (23) de couverture au moins partielle en un point (24) d'intersection qui correspond à un point de la zone de transport (101) du fourchon (10);
- la tangente (115) à la ligne de développement (11) de chaque fourchon (10) en correspondance du point d'intersection (24) et la tangente (220) à une ligne de développement (221) de chaque bande (22) adjacente à celle-ci en correspondance du même point d'intersection (24) forment entre elles, à l'extérieur de la surface (23) de couverture au moins partielle et sur le côté vers lequel la concavité de transport (112) est orientée, un angle (A) supérieur à 90 degrés; de manière à ce que, pendant le déplacement du fourchon (10) le long de la zone de transport de la trajectoire fermée du point de prélèvement au point de libération, le produit agricole tende à s'éloigner des bandes (22) et à s'accumuler dans la concavité de transport (112), en facilitant la libération du produit agricole des fourchons (10) en correspondance du point de libération.

2. Dispositif de ramassage (2) selon la revendication 1,
**caractérisé en ce que** l'angle (A) est supérieur à 110 degrés.

3. Dispositif de ramassage (2) selon la revendication 1, **caractérisé en ce que** l'angle (A) est compris entre 120 et 140 degrés.

4. Dispositif de ramassage (2) selon la revendication 1,
**caractérisé en ce que** l'angle (A) est inférieur à 170 degrés.

5. Dispositif de ramassage (2) selon l'une quelconque des revendications précédentes, **caractérisé en ce qu'**au moins une partie de la concavité de retenue et de transport (112) est définie par une ligne interrompue.

6. Dispositif de ramassage (2) selon la revendication 5, **caractérisé en ce que** la ligne interrompue est définie par un premier (113) et un second (114) segment.

7. Dispositif de ramassage (2) selon la revendication 6,
**caractérisé en ce que** le point de rencontre entre le premier (113) et le second (114) segment est moins éloigné de la zone d'accrochage (102) que de la zone de prélèvement (100).

8. Dispositif de ramassage (2) selon l'une quelconque des revendications 5 à 7, **caractérisé en ce qu'**au moins deux des segments formant la ligne interrompue sont joints entre eux par une partie courbée.

9. Dispositif de ramassage (2) selon l'une quelconque des revendications précédentes, **caractérisé en ce qu'**il comprend deux ou plus fourchons (10) identiques placés côte-à-côte.
